# EUROPÄISCHE PATENTSCHRIFT

(11) **EP 1 919 130 B1**
(45) Veröffentlichungstag und Bekanntmachung des Hinweises auf die Patenterteilung: **09.03.2011**
(21) Anmeldenummer: 06023053.9
(22) Anmeldetag: 06.11.2006
(51) Int. Cl.: H04L 12/26

(54) **Vorrichtung und Verfahren für eine Kombination eines Protokolltests und einer Messung der Bitfehlerrate**
Apparatus and method for a combination of a protocol test and a bit error measurement
Dispositif et méthode pour une combinaison d'un test du protocole et d'une mesure du taux d'erreurs binaires

(43) Veröffentlichungstag der Anmeldung: 07.05.2008
(73) Patentinhaber: Tektronix International Sales GmbH, 8212 Neuhausen (CH)
(72) Erfinder: Forsbach, Jürgen, 13591 Berlin (DE)
(74) Vertreter: Schurack, Eduard F.

(56) Entgegenhaltungen:
- DE-A1- 19 722 811
- US-A1- 2006 200 708
- TEKTRONIX INC.: "WiMAX Testing on the K1297-G35 Platform"[Online] Oktober 2006 (2006-10), Seiten 1-2, XP007902059 Gefunden im Internet: URL:http://www.tek.com/site/ps/2F-20129/pd fs/2FW_20129.pdf> [gefunden am 2007-04-18]
- TEKTRONIX INC.: "K1297-G20 Monitor Protocol Tester, Short Introduction for Version 3.00"[Online] April 2004 (2004-04), Seiten 1-114, XP007902062 Gefunden im Internet: URL:http://www.tek.com/site/mn/mnfinder_de tail/1,1096,,00.html?id=4121&pn=C73000M607 6C2948> [gefunden am 2007-04-14]
- TEKTRONIX INC.: "K1297-G20 Monitor Protocol Tester, User Manual"[Online] Juni 2004 (2004-06), Seiten 1-198, XP007902063 Gefunden im Internet: URL:http://www.tek.com/site/mn/mnfinder_de tail/1,1096,,00.html?id=2756&pn=C73000B607 6C839> [gefunden am 2007-03-28]

## Beschreibung

Die vorliegende Erfindung betrifft einen Protokolltester zur Durchführung eines Protokolltests, wobei der Protokolltester einen Eingang für die Einspeisung von Daten, eine Protokolldekodiervorrichtung zum Dekodieren von Daten, einen Ausgang zum Bereitstellen der dekodierten Daten und eine Vorrichtung zur Messung der Bitfehlerrate aufweist. Sie betrifft überdies ein entsprechendes Verfahren zum Durchführen eines Protokolltests.

Die Vorbereitungen der Mobilfunkindustrie auf den Übergang zu 3D nehmen immer mehr Gestalt an. UMTS und CDMA2000 sind Technologien der dritten Generation (3G), die durch den Bedarf nach mehr mobiler Bandbreite und neuen Services entstanden sind und mit diesen Eigenschaften das Potenzial für die Erschließung neuer Einnahmequellen besitzen. Die neuen 3G-Netzwerkelemente, -schnittstellen und -protokolle werden Installationstechniker und Netzbetreiber vor neue Herausforderungen stellen. Im Gegensatz zur 2G-Technologie, wo die Standards genau bekannt und konsolidiert sind, lassen sich Interoperabilitätsprobleme oft nicht mehr mit einfachen Protokollmonitoren beheben.

Mit der Einführung von 3G müssen praktisch überall im Netz neue Elemente - wahrscheinlich von unterschiedlichen Anbietern - installiert werden. Geräteentwickler legen die neuen 3G-Spezifikationen und -standards in gutem Glauben aus, dennoch wird es unweigerlich verschiedene Lösungen und abweichende Implementierungen zwischen den Herstellern geben. Die Folge sind Kompatibilitätsprobleme, wenn zum Beispiel ein neuer RNC oder BSC von Anbieter A an eine MSC von Anbieter B angeschlossen wird. Solange 3G noch nicht etabliert ist und in allen Aspekten verstanden wird, sind Überprüfung, Inbetriebnahme, Fehlerdiagnose und Abnahme komplizierter denn je. Nach dem Stand der Technik lassen sich die dabei verwendeten Protokolltestverfahren in drei Hauptkategorien unterteilen:

Monitoring: Dies ist die einfachste Methode der Protokollprüfung. Sie ist ein probates Mittel für viele Protokoll- und Interoperabilitätsprobleme, vor allem in etablierten 2G-Netzen. Ein Protokollmonitor ist (in der Regel) nicht intrusiv; er erfasst Nachrichten, dekodiert diese und zeigt sie in lesbarer Form an. Ein Monitor kann auf Signalisierungsfehler aufmerksam machen, die erfassten Parameter und Werte jedoch nicht in ihrem spezifischen Kontext interpretieren, d. h. die Fehlerursache nicht benennen. Monitoringtools sind in kompakten, preisgünstigen Konfigurationen für den Vor-Ort-Einsatz erhältlich.

Simulation und Emulation: Ein Protokollsimulator/-emulator übernimmt die Funktion eines Netzwerkelements und gilt daher als intrusives Messinstrument. Je nach Konfiguration kann er genau wie das fehlende Element Protokollmeldungen erzeugen und auf empfangene Meldungen reagieren. Simulatoren/Emulatoren sind zwar aufwändiger zu konfigurieren, einige Geräte verfügen jedoch über Hilfsmittel, mit denen sich die Prüfanordnungen auf einfache Weise festlegen lassen. Bisher waren Protokollsimulatoren/-emulatoren komplexer, teurer und größer als Monitoringinstrumente. Dies hat sich mit den jüngsten Trends jedoch drastisch geändert.

Konformitätsprüfung: Hierbei handelt es sich um die Durchführung von Pass-/Fail-Tests mit vordefinierten Testfällen. Eine Konformitätsprüfung wird oft bei der Abnahme neu installierter Netzwerkelemente verwendet und erfordert einen Simulator/Emulator.

Wie bereits erwähnt, wird es bei 2,5- und 3G-Installationen höchst wahrscheinlich unumgänglich sein, die Interoperabilität zwischen Elementen verschiedener Gerätehersteller zu überprüfen. Die Schnittstellen zwischen den Netzwerkelementen sind überwiegend "offen". Dies bedeutet, dass ein Netzbetreiber beispielsweise eine MSC von einem Lieferanten und das BSC/BTS-Paar oder den RNC von einem zweiten Lieferanten beziehen kann. Dies fördert einerseits einen gesunden Wettbewerb, kompliziert andererseits aber auch den Installations- und Prüfungsprozess.

Neben dem bereits erläuterten Interoperabilitätsproblem stellt sich als nächstes die Frage, wie die beiden Anbieter vor Ort koordiniert werden sollen. Nur selten arbeiten zwei Installationsteams - eines für die MSC und eines für den BSC/BTS bzw. RNC - nebeneinander und führen ihre Aufgabe gleichzeitig durch. Weitaus häufiger passiert es, dass ein Team Tage oder sogar Wochen vor dem anderen fertig ist und den Auftrag mit einer möglichst schnellen Abnahmeprüfung zum Abschluss bringen will.

Wie aber soll der Lieferant des BSC/BTS oder RNC die Konformität und Interoperabilität seiner Installation ohne MSC beweisen? Hierzu benötigt man eine Ersatz-MSC - ein Prüfgerät, das sich wie eine reale, vollständig konforme, funktionstüchtige MSC verhält. Ein solches Werkzeug ist natürlich der Protokollsimulator/-emulator. Er kann an die Stelle des fehlenden Elements treten, mit dem Netzwerk agieren, fehlerhaftes Verhalten simulieren, die Signalisierung und den Nachrichteninhalt steuern und die Ergebnisse all dieser Vorgänge aufzeichnen. Dank der jüngsten Fortschritte in der Test- und Messtechnik können alle diese Merkmale in ein einziges kompaktes Gerät für den Vor-Ort-Einsatz integriert werden.

Zusammenfassend sind damit die mit der Inbetriebnahme eines Netzes oder dem Einbau neuer Netzwerkkomponenten befaßten Personen mit Aufgaben konfrontiert, die sich durch große Komplexität auszeichnen und noch dazu unter großem Zeitdruck, insbesondere vor Ort, gelöst werden müssen.

Neben den so genannten Protokolltestern, wobei in der vorliegenden Anmeldung unter diesem Begriff Geräte zum Zwecke des Monitoring, der Simulation, der Emulation und zur Durchführung von Konformitätstests zu verstehen sind, sind so genannte BER (Bit Error Rate = Bitfehlerrate)-Tester bekannt. Dabei stellt die Bitfehlerrate ein Maß für die Qualität der Übertragung auf digitalen Übertragungsstrecken der Nachrichtentechnik und der Netzwerktechnik dar. Die Bitfehlerrate beschreibt demnach das Verhältnis der Anzahl der falsch übertragenen Bits im Vergleich zur Anzahl der insgesamt übertragenen Bits. Für eine Messung der Bitfehlerrate muss stets ein Sender vorhanden sein, der ein definiertes Prüfmuster erzeugt, und es muss einen Empfänger geben, der dieses Ergebnis auswertet sowie das Ergebnis anzeigt. Dabei kann der Messaufbau sehr unterschiedlich aussehen: Wird nur der eigene Anschluss untersucht, wird beispielsweise mit einem Selbstanruf gearbeitet. Ist dagegen ein kompletter Übertragungsweg zu betrachten, dann wird eine Ende-zu-Ende-Messung durchgeführt. Beide Varianten können darüber hinaus mit Schleifen arbeiten, mit deren Hilfe das Prüfbitmuster wieder an den Sender zurückgeschickt wird. Sender und Empfänger sind in diesem Fall eine Einheit.

Die Online-Veröffentlichung "WiMAX Testing on the K1297-G35 Platform" von TEKTRONIX INC., Oktober 2006 (2006-10), Seiten 1-2, XP007902059, gefunden im Internet: URL:http://www.tek.com/site/ps/2F-20129/pd fs/2FW_20129.pdf>[gefunden am 2007-04-18] offenbart außerdem eine Kombination von Protokollanalyse und Bitfehlerratenmessung. Echtzeit-Benutzerebenen-Bitfehlertests arbeiten parallel mit Protokollanalyse und erfordern keine RF-Tools.

Es sei außerdem auf die Online-Veröffentlichung "K1297-G20 Monitor Protocol Tester, Short Introduction for Version 3.00" von TEKTRONIX INC., April 2004, Seiten 1-114, XP007902062, gefunden im Internet: URL:http://www.tek.com/site/mn/mnfinder_de tail/1, 1096,,00.html?id=4121&pn=C73000M607 6C2948> [gefunden am 2007-04-14], verwiesen, die das Verwenden von Triggern bei Protokolltestern offenbart.

Schließlich sei auf die US 2006/0200708 A1 verwiesen, die einen Bitfehlerratentester offenbart, der das Aufnehmen und Speichern von das Auftreten eines bestimmten Trigger-Ereignisses während Bitfehlermessungen betreffenden Informationen ermöglicht.

Die Aufgabe der vorliegenden Erfindung besteht darin, den eingangs genannten Protokolltester bzw. das eingangs genannte Verfahren derart weiterzubilden, dass die Überprüfung, Inbetriebnahme, Fehlerdiagnose und Abnahme von Telekommunikationsnetzen vor Ort bei möglichst geringem zusätzlichen Aufwand weiterverbessert wird. Die Verbesserung soll insbesondere darin bestehen, den mit der Durchführung betrauten Personen zu ermöglichen, die benötigten Erkenntnisse noch schneller zu gewinnen.

Diese Aufgabe wird gelöst durch einen Protokolltester mit den Merkmalen von Patentanspruch 1 sowie durch ein Verfahren mit den Merkmalen von Patentanspruch 11.

Erfindungsgemäß umfasst der Protokolltester eine Triggervorrichtung, die ausgelegt ist, beim Auftreten einer mit dem Auftreten eines vorgebbaren Werts einer Bitfehlerrate, der von der Vorrichtung, zur Messung der Bitfehlerrate bereitgestellt wird, verknüpften Triggerbedingung mindestens eine Aktion betreffend die Protokolldekodiervorrichtung auszulösen und/oder beim Auftreten einer mit dem Auftreten mindestens eines Ereignisses in den dekodierten Daten verknüpften Triggerbedingung mindestens eine Aktion betreffend die Vorrichtung zur Messung der Bitfehlerrate auszulösen.

Damit wird eine automatische Korrelation der Messdaten ermöglicht. Erhöht sich der BER-Wert und eine erhöhte Anzahl von Calls wird angezeigt, kann dies beispielsweise ein wichtiger Hinweis für den Hersteller bzw. Netzbetreiber sein. Das gleiche gilt natürlich auch umgekehrt für die Anzahl von Handovern oder das Öffnen von breitbandigen Kanälen. Im normalen Betrieb nehmen die so genannten Trace Files, die im Stand der Technik getrennt für die Vorrichtung zur Messung der Bitfehlerrate und den Protokolltester mit der Protokolldekodiervorrichtung geführt werden, sehr schnell unhandliche Größen an. Durch die Triggerfunktion wird erstens die Möglichkeit bereitgestellt, die aufgezeichnete Datenmenge deutlich zu reduzieren, zweitens lassen sich die Vorkommnisse von Fehlerfällen sehr viel schneller auffinden und drittens lässt sich sehr viel einfacher eine Korrelation zwischen den Protokollinhalten und der zugehörigen Bitfehlerrate erstellen, welche zwei unterschiedliche Aspekte zur Beurteilung der Qualität eines Netzwerks darstellen. Die Bitfehlerrate ist von der Qualität des Übertragungskanals abhängig. Bei zu hohen Werten der Bitfehlerrate ist eine einwandfreie Benutzung des Übertragungskanals nicht mehr möglich. Der Netzelementhersteller bzw. der Netzbetreiber muss die Gründe für die zu hohen Werte der Bitfehlerrate finden. Allerdings ist die Übertragungsqualität nicht nur von der Topologie abhängig, sondern zum anderem auch von der Art der Benutzung des/der zur Verfügung stehenden Netzwerkelemente bzw. -kanäle, beispielsweise der Anzahl der gleichzeitig aktiven Benutzer. Ein weiterer Faktor können beispielsweise unnötige Handover zwischen Nachbarzellen sein. Diese unterschiedlichen Ursachen für einen Qualitätsverlust in einem Netzwerk können durch die vorliegende Erfindung auf einfache Weise zuverlässig zueinander in Korrelation gesetzt werden, miteinander verglichen werden und gemeinsam zur Verbesserung der Qualität des Netzwerks in zeitlich wesentlich weniger aufwendigen Prozessen als aus dem Stand der Technik bekannt ausgewertet werden.

Üblicherweise umfasst der Protokolltester einen Protokollstack mit mehreren Protokollschichten, wobei die erste Protokollschicht des Protokollstacks die üblicherweise von der physikalischen Schicht gebildet wird, mit dem Eingang für die Einspeisung von Daten gekoppelt ist, wobei die Protokolldekodiervorrichtung und die Vorrichtung zur Messung der Bitfehlerrate mit einer Protokollschicht des Protokollstacks gekoppelt sind, die im Protokollstack höher als die erste Protokollschicht angeordnet ist. Dies bedeutet, dass die Protokolldekodiervorrichtung und die Vorrichtung zur Messung der Bitfehlerrate ausgehend von der untersten Protokollschicht mehrere Elemente des Protokollstacks gemeinsam nutzen. Diese gemeinsam genutzten Elemente brauchen daher nur einmal vorgesehen werden. Sie müssen nur einmal eingerichtet, konfiguriert, gepflegt und aktualisiert werden. Dies führt zu einer weiteren Reduktion des Aufwands. Beispielsweise können die Synchronisations- und Framing-Funktionen der Empfangssoftware gemeinsam genutzt werden. Diese sorgen dafür, dass sich der erfindungsgemäße Protokolltester auf den Datenstrom synchronisiert und Datenpakete bildet. Gemeinsam genutzt werden überdies so genannte Reassembler, die Hilfsfunktionen für Protokollschichten umfassen, die sich mit der Dekodierung beschäftigen. Bevorzugt sind daher die Protokolldekodiervorrichtung und die Vorrichtung zur Messung der Bitfehlerrate mit der zweiten, dritten und/oder der vierten Protokollschicht des Protokollstacks gekoppelt.

In einer besonders bevorzugten Ausführungsform ist dabei die mit dem Auftreten mindestens eines Ereignisses in den dekodierten Daten verknüpfte Triggerbedingung, mit dem Auftreten mindestens einer vorgebbaren Nachricht und/oder mindestens eines vorgebbaren Parameters und/oder mindestens eines vorgebbaren Werts verknüpft.

Dabei kann die die Vorrichtung zur Messung der Bitfehlerrate betreffende Aktion die Aktivierung der Vorrichtung zur Messung der Bitfehlerrate oder die Deaktivierung der Vorrichtung zur Messung der Bitfehlerrate und/oder die Protokollierung des aktuellen Werts der Bitfehlerrate, der von der Vorrichtung zur Messung der Bitfehlerrate bereitgestellt wird, sein. Die die Protokolldekodiervorrichtung betreffende Aktion kann dann die Aktivierung der Protokolldekodiervorrichtung oder die Deaktivierung der Protokolldekodiervorrichtung sein.

Außerdem kann bei Auftreten einer mit dem Auftreten eines vorgebbaren Werts einer Bitfehlerrate, der von der Vorrichtung zur Messung der Bitfehlerrate bereitgestellt wird, verknüpften Triggerbedingung auch die Protokollierung des Erreichens des vorgebbaren Werts der Bitfehlerrate ausgelöst werden.

Schließlich kann beim Auftreten einer Triggerbedingung die Aktivierung einer vorgebbaren Anzeige auf einer Anzeigevorrichtung ausgelöst werden.

Bevorzugt weist die Vorrichtung zur Messung der Bitfehlerrate einen Ausgang auf, an dem mindestens ein Wert einer gemessenen Bitfehlerrate bereitstellbar ist, wobei der Protokolltester weiterhin eine Speichervorrichtung umfasst, die ausgelegt ist, die dekodierten Daten zusammen mit dem mindestens einem zugehörigen Wert der gemessenen Bitfehlerrate abzuspeichern. Dadurch wird eine Analyse zu einem späteren Zeitpunkt deutlich erleichtert. Die beiden einer Messung zugrunde liegenden Ergebnisfiles sind in ein einziges File zusammengefasst. Damit wird die Möglichkeit einer automatischen Analyse entkoppelt vom Zeitpunkt der Durchführung des Tests weitgehend ohne Steuerung durch eine Bedienperson ermöglicht.

Bevorzugt umfasst der Protokolltester weiterhin eine Ansteuervorrichtung für eine Anzeigevorrichtung, wobei die Ansteuervorrichtung mit der Protokolldekodiervorrichtung und der Vorrichtung zur Messung der Bitfehlerrate gekoppelt ist und ausgelegt ist, an ihrem Ausgang ein Signal für die Anzeigevorrichtung bereitzustellen, das die gleichzeitige Anzeige auf der Anzeigevorrichtung mindestens eines Ausgangssignals der Protokolldekodiervorrichtung und mindestens eines Ausgangssignals der Vorrichtung zur Messung der Bitfehlerrate umfasst. Dies eröffnet die Möglichkeit, auf einer Anzeige, insbesondere gleichzeitig, sowohl Ergebnisse der Protokolldekodiervorrichtung als auch Ergebnisse der Vorrichtung zur Messung der Bitfehlerrate anzuzeigen und damit der Bedienperson zu ermöglichen, diese einfach und zuverlässig zueinander in Korrelation zu setzen. Da dies ebenfalls die Möglichkeit eröffnet, die Anzeige der unterschiedlichen Ergebnisse voneinander abhängig zu gestalten, resultiert dies in einer deutlichen Verbesserung der Arbeitsumgebung der mit der Durchführung der genannten Tests betrauten Bedienpersonen. Eine schneller Auswertung und Fehlerfindung wird dadurch ermöglicht.

Die mit Bezug auf den erfindungsgemäßen Protokolltester genannten bevorzugten Ausführungsformen und deren Vorteile gelten entsprechend, soweit anwendbar, für das erfindungsgemäße Verfahren.

Weitere vorteilhafte Ausführungsformen ergeben sich aus den Unteransprüchen.

Im Nachfolgenden wird nunmehr ein Ausführungsbeispiel eines erfindungsgemäßen Protokolltesters unter Bezugnahme auf die beigefügten Zeichnungen näher beschrieben. Es zeigen:
- Fig. 1: eine aus dem Stand der Technik bekannte Anordnung zur Durchführung eines Protokolltests und eines Tests betreffend die Messung der Bitfehlerrate;
- Fig. 2: in schematischer Darstellung den Aufbau eines erfindungsgemäßen Protokolltesters; und
- Fig. 3: in schematischer Darstellung den Aufbau eines erfindungsgemäßen Protokolltesters, wobei die Vorrichtung zur Signalverarbeitung in größerem Detail dargestellt ist.

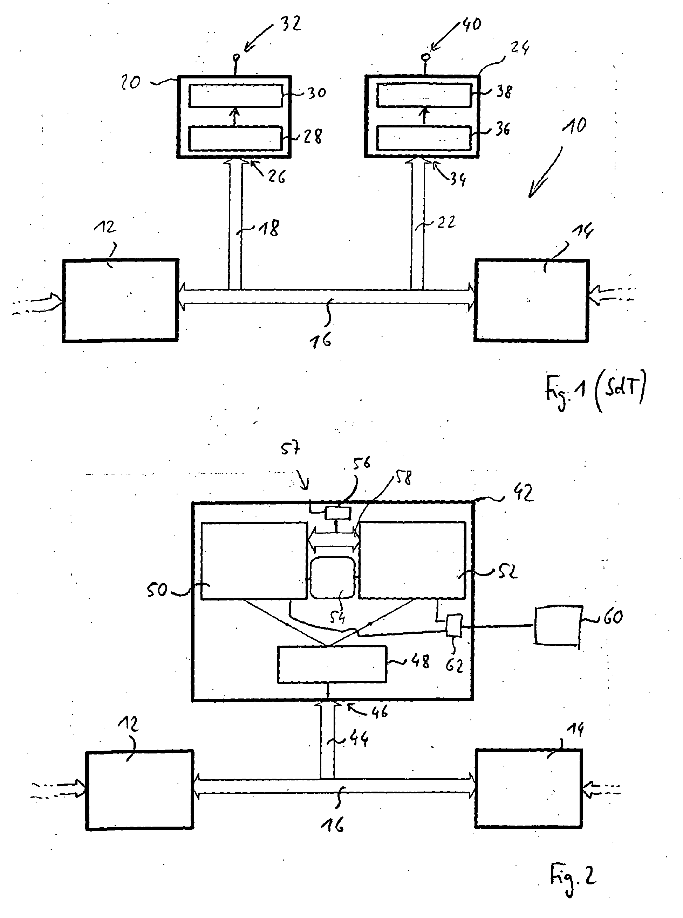

Fig. 1 zeigt eine aus dem Stand der Technik bekannte Anordnung zum Testen eines Telekommunikationsnetzwerks 10, das mehrere Netzwerkelemente umfasst, wobei vorliegend zwei Netzwerkelemente 12, 14 exemplarisch dargestellt sind. An die Verbindungsleitung 16 zwischen den beiden Netzwerkelementen 12, 14 ist einerseits über eine Verbindungsleitung 18 ein Protokolltester 20, andererseits über eine Verbindungsleitung 22 eine Vorrichtung 24 zur Messung der Bitfehlerrate angeschlossen. Der Protokolltester 20 weist einen Eingang 26 auf, über den die Daten eingespeist werden. Diese Daten werden zunächst einer Vorrichtung 28 zur Signalverarbeitung zugeführt, die ihr Ausgangssignal einem Block 30 mit einer Protokolldekodiervorrichtung weiterleitet. An einem Ausgang 32 werden die dekodierten Daten zur Weiterverarbeitung, beispielsweise zur Darstellung auf einer Anzeigevorrichtung oder zum Bereitstellen an eine Speichervorrichtung bereitgestellt. Die Vorrichtung 24 zur Messung der Bitfehlerrate weist einen Eingang 34 auf, über den ebenfalls die Daten eingespeist werden. Sie umfasst einen Block 36 zur Signalverarbeitung, der sein Ausgangssignal einem Block 38 zur eigentlichen Bestimmung der Bitfehlerrate zuführt. Die Ergebnisse werden an einem Ausgang 40 zur Weiterverarbeitung bereitgestellt.

Fig. 2 zeigt nun den Aufbau eines erfindungsgemäßen Protokolltesters, wobei Bauelementen, die denen von Fig. 1 entsprechen, die bereits in Zusammenhang mit Fig. 1 eingeführten Bezugszeichen zugewiesen sind. Der erfindungsgemäße Protokolltester trägt das Bezugszeichen 42 und ist über eine Leitung 44 an die Leitung 16 gekoppelt. Er weist einen Eingang 46 zum Einspeisen von Daten auf, der zunächst an einen Block 48 zur Signalverarbeitung gekoppelt ist. Der Block 48 ist nur einmal ausgeführt und ist einerseits mit einer Protokolldekodiervorrichtung 50, andererseits mit einem Block 52 zur Bestimmung der Bitfehlerrate gekoppelt. Die Blöcke 50 und 52 sind beide mit einer gemeinsamen Aufzeichnungsdatei, einem sogenannten Trace File, 54 gekoppelt, in das sowohl die Ergebnisse des Blocks 50, als auch die Ergebnisse des Blocks 52 eingetragen werden. Von besonderer Bedeutung ist das Vorhandensein einer Triggervorrichtung 56, die, wie durch den Doppelpfeil 58 gekennzeichnet, steuernd sowohl auf den Block 50 als auch auf den Block 52 zugreifen kann. Die Triggervorrichtung 56 weist eine Schnittstelle 57 auf, über die die jeweilige Triggerbedingung oder die jeweiligen Triggerbedingungen durch eine Bedienperson definiert werden kann/können. Die Triggervorrichtung 56 ist ausgelegt, beim Auftreten einer Triggerbedingung mindestens eine Aktion betreffend die Protokolldekodiervorrichtung 50 und/oder den Block 52 zur Messung der Bitfehlerrate auszulösen. Dabei kann die Triggerbedingung beispielsweise mit dem Auftreten mindestens eines Ereignisses in den vom Block 50 dekodierten Daten verknüpft sein, insbesondere mit dem Auftreten mindestens einer vorgebbaren Nachricht und/oder mindestens eines vorgebbaren Parameters und/oder mindestens eines vorgebbaren Werts. Hierbei kann die Aktion insbesondere die Aktivierung des Blocks 52 zur Messung der Bitfehlerrate oder die Deaktivierung des Blocks 52 zur Messung der Bitfehlerrate und/oder die Protokollierung des aktuellen Werts der Bitfehlerrate, der von dem Block 52 zur Messung der Bitfehlerrate bereitgestellt wird, im Trace File 54 und/oder die Aktivierung einer vorgebbaren Anzeige auf einer Anzeigevorrichtung 60 sein. Die Anzeigevorrichtung 60 ist dabei über eine Ansteuervorrichtung 62 mit dem Block 50 zur Protokolldekodierung und dem Block 52 zur Messung der Bitfehlerrate gekoppelt und ausgelegt, wobei die Ansteuervorrichtung 62 ausgelegt ist, am Ausgang ein Signal für die Anzeigevorrichtung 60 bereitzustellen, das die gleichzeitige oder abwechselnde Anzeige auf der Anzeigevorrichtung 60 mindestens eines Ausgangssignals des Blocks 50 und mindestens eines Ausgangssignals des Blocks 52 umfasst.

Die Triggerbedingung kann jedoch auch mit dem Auftreten eines vorgebbaren Werts der Bitfehlerrate, der vom Block 52 bereitgestellt wird, gekoppelt sein und dabei kann die Aktion die Aktivierung des Blocks 50 oder die Deaktivierung des Blocks 50 und/oder die Protokollierung des Erreichens des vorgebbaren Werts der Bitfehlerrate und/oder die Aktivierung einer vorgebbaren Anzeige auf der Anzeigevorrichtung 60 sein.

Das Trace File 54 ist ausgelegt, zusammengehörige Ergebnisse des Blocks 50 und des Blocks 52, beispielsweise die dekodierten Daten zusammen mit mindestens einem zugehörigen Wert der gemessenen Bitfehlerrate, abzuspeichern.

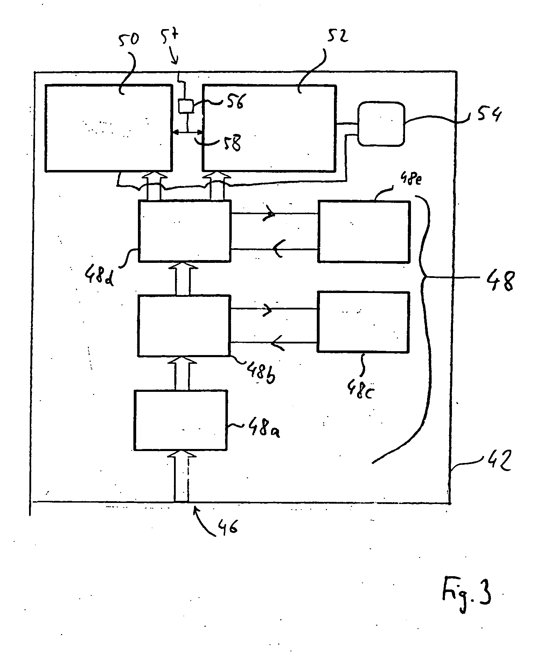

Fig. 3 zeigt in detaillierterer Darstellung den Aufbau eines erfindungsgemäßen Protokolltesters 42. Sie zeigt insbesondere in größerer Ausführlichkeit für ein Ausführungsbeispiel den Aufbau des Blocks 48 zur Signalverarbeitung von Fig. 2. Fig. 3 verdeutlicht auf beeindruckende Weise, wie aufwändig die Vorgehensweise nach dem Stand der Technik, siehe Fig. 1, war. Dort musste die Signalverarbeitung in beiden Signalverarbeitungsblöcken 28, 36 entsprechend dem jeweiligen Standard, beispielsweise WiMAX, UMTS, etc., eingespielt, konfiguriert, gewartet und aktualisiert werden. Bei der vorliegenden Erfindung halbiert sich der Aufwand, da Block 50 und Block 52 mehrere Protokollschichten des in der Signalverarbeitung 48 sich widerspiegelnden Protokollstacks gemeinsam nutzen. Im vorliegenden Beispiel einer Realisierung für den Standard WiMAX entspricht beispielsweise Block 48a der Level2 Methode, die Synchronisations- und Framing-Funktionen verkörpert. Dadurch wird es dem Protokolltester 42 ermöglicht, sich auf den Datenstrom am Eingang 46 zu synchronisieren und Datenpakete zu bilden. Der Block 48b entspricht im Ausführungsbeispiel einem Decoder Step 1 und Block 48c einem Reassembler Step 1, wobei vom Block 48b Daten der entsprechenden Protokollschicht zum Block 48c transportiert werden und vom Block 48c reassembliert zum Block 48b zurück übermittelt werden. Block 48d entspricht im Ausführungsbeispiel einem Decoder Step 2 und Block 48e einem Reassembler Step 2. Der Block 48d übermittelt wiederum Daten der entsprechenden Protokollschicht an den Block 48e, während Block 48e wiederum reassembliert an den Block 48d übermittelt. Bezogen auf das OSI-Referenzmodell sind vorliegend Block 50 und Block 52 mit der dritten Protokollschicht des Protokollstacks der Signalverarbeitung 48 gekoppelt. In anderen Ausführungsbeispielen kann dies auch die zweite Protokollschicht oder die vierte oder eine noch höhere Protokollschicht sein.

## Patentansprüche

1. Protokolltester (42) zur Durchführung eines Protokolltests, wobei der Protokolltester (42) einen Eingang (46) für die Einspeisung von Daten, eine Protokolldekodiervorrichtung (50) zum Dekodieren von Daten, einen Ausgang zum Bereitstellen der dekodierten Daten und eine Vorrichtung (52) zur Messung der Bitfehlerrate umfasst,
**dadurch gekennzeichnet,**
**dass** der Protokolltester (42) eine Triggervorrichtung (56) umfasst, die ausgelegt ist, beim Auftreten einer mit dem Auftreten eines vorgebbaren Werts der Bitfehlerrate, der von der Vorrichtung (52) zur Messung der Bitfehlerrate bereitgestellt wird, verknüpften Triggerbedingung mindestens eine Aktion betreffend die Protokolldekodiervorrichtung (50) auszulösen und/oder beim Auftreten einer mit dem Auftreten mindestens eines Ereignisses in den dekodierten Daten verknüpften Triggerbedingung mindestens eine Aktion betreffend die Vorrichtung (52) zur Messung der Bitfehlerrate auszulösen.

2. Protokolltester (42) nach Anspruch 1,
**dadurch gekennzeichnet,**
**dass** der Protokolltester (42) einen Protokollstack mit mehreren Protokollschichten umfasst, wobei die erste Protokollschicht des Protokollstacks mit dem Eingang für die Einspeisung von Daten gekoppelt ist, wobei die Protokolldekodiervorrichtung (50) und die Vorrichtung (52) zur Messung der Bitfehlerrate mit einer Protokollschicht des Protokollstacks gekoppelt sind, die im Protokollstack höher als die erste Protokollschicht angeordnet ist.

3. Protokolltester (42) nach Anspruch 2,
**dadurch gekennzeichnet,**
**dass** die Protokolldekodiervorrichtung (50) und die Vorrichtung (52) zur Messung der Bitfehlerrate mit der zweiten, dritten und/oder vierten Protokollschicht des Protokollstacks gekoppelt sind.

4. Protokolltester (42) nach einem der vorhergehenden Ansprüche,
**dadurch gekennzeichnet,**
**dass** die mit dem Auftreten mindestens eines Ereignisses in den dekodierten Daten verknüpfte Triggerbedingung mit dem Auftreten mindestens einer vorgebbaren Nachricht und/oder mindestens eines vorgebbaren Parameters und/oder mindestens eines vorgebbaren Werts verknüpft ist.

5. Protokolltester (42) nach einem der vorhergehenden Ansprüche,
**dadurch gekennzeichnet,**
**dass** die die Vorrichtung (52) zur Messung der Bitfehlerrate betreffende Aktion die Aktivierung der Vorrichtung (52) zur Messung der Bitfehlerrate oder die Deaktivierung der Vorrichtung (52) zur Messung der Bitfehlerrate und/oder die Protokollierung des aktuellen Werts der Bitfehlerrate, der von der Vorrichtung (52) zur Messung der Bitfehlerrate bereitgestellt wird, ist.

6. Protokolltester (42) nach einem der vorhergehenden Ansprüche,
**dadurch gekennzeichnet,**
**dass** die die Protokolldekodiervorrichtung (50) betreffende Aktion die Aktivierung der Protokolldekodiervorrichtung (50) oder die Deaktivierung der Protokolldekodiervorrichtung (50) ist.

7. Protokolltester (42) nach einem der vorhergehenden Ansprüche,
**dadurch gekennzeichnet,**
**dass** beim Auftreten einer mit dem Auftreten eines vorgebbaren Werts der Bitfehlerrate, der von der Vorrichtung (52) zur Messung der Bitfehlerrate bereitgestellt wird, verknüpften Triggerbedingung die Protokollierung des Erreichens des vorgebbaren Werts der Bitfehlerrate ausgelöst wird.

8. Protokolltester (42) nach einem der vorhergehenden Ansprüche,
**dadurch gekennzeichnet,**
**dass** beim Auftreten einer Triggerbedingung die Aktivierung einer vorgebbaren Anzeige auf einer Anzeigevorrichtung (60) ausgelöst wird.

9. Protokolltester (42) nach einem der vorhergehenden Ansprüche,
**dadurch gekennzeichnet,**
**dass** die Vorrichtung (52) zur Messung der Bitfehlerrate einen Ausgang aufweist, an dem mindestens ein Wert einer gemessenen Bitfehlerrate bereitstellbar ist, wobei der Protokolltester (42) weiterhin eine Speichervorrichtung umfasst, die ausgelegt ist, die dekodierten Daten zusammen mit dem mindestens einen zugehörigen Wert der gemessenen Bitfehlerrate abzuspeichern.

10. Protokolltester (42) nach einem der vorhergehenden Ansprüche,
**dadurch gekennzeichnet,**
**dass** der Protokolltester (42) weiterhin eine Ansteuervorrichtung (62) für eine Anzeigevorrichtung (60) umfasst, wobei die Ansteuervorrichtung (62) mit der Protokolldekodiervorrichtung (50) und der Vorrichtung (52) zur Messung der Bitfehlerrate gekoppelt ist und ausgelegt ist, an ihrem Ausgang ein Signal für die Anzeigevorrichtung (60) bereitzustellen, das die gleichzeitige Anzeige auf der Anzeigevorrichtung (60) mindestens eines Ausgangssignals der Protokolldekodiervorrichtung (50) und mindestens eines Ausgangssignals der Vorrichtung (52) zur Messung der Bitfehlerrate umfasst.

11. Verfahren zum Durchführen eines Protokolltests, wobei der Protokolltester (42) einen Eingang (46) für die Einspeisung von Daten, eine Protokolldekodiervorrichtung (50) zum Dekodieren von Daten, einen Ausgang zum Bereitstellen der dekodierten Daten und eine Vorrichtung (52) zur Messung der Bitfehlerrate umfasst,
mit folgenden Schritten:
a) Dekodieren von Daten mittels der Protokolldekodiervorrichtung (50); und
b) Messung der Bitfehlerrate mittels der Vorrichtung (52) zur Messung der Bitfehlerrate,
**dadurch gekennzeichnet,**
**dass** nach Auftreten einer mit dem Auftreten mindestens eines Ereignisses in den dekodierten Daten verknüpften Triggerbedingung eine Aktion betreffend Schritt b) ausgelöst wird,
und/oder nach Auftreten einer mit dem Auftreten eines vorgebbaren Werts der Bitfehlerrate, der von der Vorrichtung (52) zur Messung der Bitfehlerrate bereitgestellt wird, verknüpften Triggerbedingung eine Aktion betreffend Schritt a) ausgelöst wird.

## Claims

1. Protocol tester (42) for performing a protocol test, said protocol tester (42) comprising an input (46) for the feeding in of data, a protocol decoding device (50) for the decoding of data, an output for providing the decoded data, and a device (52) for measuring the bit error rate,
**characterized in that**
the protocol tester (42) comprises a trigger device (56), which is designed to trigger, upon the occurrence of a trigger condition linked to the occurrence of a pregivable value of the bit error rate, which is provided by the device (52) for measuring the bit error rate, at least one action concerning the protocol decoding device (50) and/or to trigger upon the occurrence of a trigger condition linked to the occurrence of at least one incident in the decoded data at least one action concerning the device (52) for measuring the bit error rate.

2. Protocol tester (42) according to claim 1,
**characterised in that**
the protocol tester (42) comprises a protocol stack having several protocol layers, the first protocol layer of the protocol stack being coupled with the input for the feeding in of data, the protocol decoding device (50) and the device (52) for measuring the bit error rate being coupled with a protocol layer of the protocol stack, said protocol layer being arranged higher in the protocol stack than the first protocol layer.

3. Protocol tester (42) according to claim 2,
**characterised in that**
the protocol decoding device (50) and the device (52) for measuring the bit error rate are coupled with the second, third and/or fourth protocol layer of the protocol stack.

4. Protocol tester (42) according to one of the preceding claims,
**characterised in that**
the trigger condition linked with the occurrence of at least one incident in the decoded data is linked with the occurrence of at least one predeterminable message and/or of at least one predeterminable parameter and/or of at least one predeterminable value.

5. Protocol tester (42) according to one of the preceding claims,
**characterised in that**
the action concerning the device (52) for measuring the bit error rate is the activation of the device (52) for measuring the bit error rate or the deactivation of the device (52) for measuring the bit error rate and/or the logging of the current bit error rate value provided by the device (52) for measuring the bit error rate.

6. Protocol tester (42) according to one of the preceding claims,
**characterised in that**
the action concerning the protocol decoding device (50) is the activation of the protocol decoding device (50) or the deactivation of the protocol decoding device (50).

7. Protocol tester (42) according to one of the preceding claims,
**characterised in that**
upon the occurrence of a trigger condition which is linked to the occurrence of a pregivable value of the bit error rate provided by the device (52) for measuring the bit error rate, the logging of reaching the pregivable value of the bit error rate is triggered.

8. Protocol tester (42) according to one of the preceding claims,
**characterised in that**
upon occurrence of a trigger condition the activation of a pregivable display on a display device (60) is triggered.

9. Protocol tester (42) according to one of the preceding claims,
**characterised in that**
the device (52) for measuring the bit error rate exhibits an output, at which at least one value of a measured bit error rate is providable, the protocol tester (42) also comprising a storage device, which is designed to store the decoded data together with the at least one associated value of the measured bit error rate.

10. Protocol tester (42) according to one of the preceding claims,
**characterised in that**
the protocol tester (42) also comprises a control device (62) for a display device (60), the control device (62) being coupled to the protocol decoding device (50) and the device (52) for measuring the bit error rate and being designed to provide, at its output, a signal for the display device (60), said signal comprising the simultaneous display, on the display device (60), of at least one output signal of the protocol decoding device (50) and of at least one output signal of the device (52) for measuring the bit error rate.

11. Method for performing a protocol test, the protocol tester (42) comprising an input (46) for the feeding in of data, a protocol decoding device (50) for the decoding of data, an output for providing the decoded data, and a device (52) for measuring the bit error rate,
comprising the following steps:
a) decoding of data by means of the protocol decoding device (50); and
b) measuring of the bit error rate by means of the device (52) for measuring the bit error rate,
**characterized in that**
upon the occurrence of a trigger condition linked to the occurrence of at least one incident in the decoded data an action concerning step b) is triggered, and/or upon occurrence of a trigger condition linked to the occurrence of a pregivable value of the bit error rate provided by the device (52) for measuring the bit error rate an action concerning step a) is triggered.

## Revendications

1. Testeur de protocole (42) destiné à l'exécution d'un test de protocole, moyennant quoi le testeur de protocole (42) comprend une entrée (46) pour l'injection de données, un dispositif de décodage de protocoles (50), destiné au décodage de données, une sortie, destinée à la mise à disposition des données décodées et un dispositif (52), destiné à la mesure du taux d'erreurs sur les bits,
**caractérisé en ce**
**que** le testeur de protocole (42) comprend un dispositif de déclenchement (56), qui est conçu, en cas d'apparition d'une condition de déclenchement, liée à l'apparition d'une valeur pouvant être prédéterminée du taux d'erreurs sur les bits, qui est mise à disposition par le dispositif (52) destiné à la mesure du taux d'erreurs sur les bits, pour déclencher au moins une action concernant le dispositif de décodage de protocoles (50) et / ou, en cas d'apparition d'une condition de déclenchement, liée à l'apparition d'au moins un évènement dans les données décodées, pour déclencher au moins une action concernant le dispositif (52) destiné à la mesure du taux d'erreurs sur les bits.

2. Testeur de protocole (42) suivant la revendication 1,
**caractérisé en ce**
**que** le testeur de protocole (42) comprend une pile de protocoles avec plusieurs couches de protocoles, moyennant quoi la première couche de protocoles de la pile de protocoles est couplée à l'entrée pour l'injection de données, moyennant quoi le dispositif de décodage de protocoles (50) et le dispositif (52), destiné à la mesure du taux d'erreurs sur les bits, sont couplés à une couche de protocoles de la pile de protocoles, qui est disposée plus en hauteur, dans la pile de protocoles, que la première couche de protocoles.

3. Testeur de protocole (42) suivant la revendication 2,
**caractérisé en ce**
**que** le dispositif de décodage de protocoles (50) et le dispositif (52), destiné à la mesure du taux d'erreurs sur les bits, sont couplés à la deuxième, troisième et / ou quatrième couche de protocoles de la pile de protocoles.

4. Testeur de protocole (42) suivant l'une des revendications précédentes,
**caractérisé en ce**
**que** la condition de déclenchement, liée à l'apparition d'au moins un évènement dans les données décodées, est liée à l'apparition d'au moins un message pouvant être prédéterminé et / ou d'au moins un paramètre pouvant être prédéterminé et / ou d'au moins une valeur pouvant être prédéterminée.

5. Testeur de protocole (42) suivant l'une des revendications précédentes,
**caractérisé en ce**
**que** l'action, qui concerne le dispositif (52) destiné à la mesure du taux d'erreurs sur les bits, est l'activation du dispositif (52) destiné à la mesure du taux d'erreurs sur les bits ou la désactivation du dispositif (52) destiné à la mesure du taux d'erreurs sur les bits et / ou l'enregistrement de la valeur actuelle du taux d'erreurs sur les bits, qui est mise à disposition par le dispositif (52) destiné à la mesure du taux d'erreurs sur les bits.

6. Testeur de protocole (42) suivant l'une des revendications précédentes,
**caractérisé en ce**
**que** l'action, qui concerne le dispositif de décodage de protocoles (50), est l'activation du dispositif de décodage de protocoles (50) ou la désactivation du dispositif de décodage de protocoles (50).

7. Testeur de protocole (42) suivant l'une des revendications précédentes,
**caractérisé en ce**
**que**, lors de l'apparition d'une condition de déclenchement, liée à l'apparition d'une valeur, pouvant être prédéterminée, du taux d'erreurs sur les bits, qui est mise à disposition par le dispositif (52) destiné à la mesure du taux d'erreurs sur les bits, l'enregistrement de la réalisation de la valeur, pouvant être prédéterminée, du taux d'erreurs sur les bits est déclenché.

8. Testeur de protocole (42) suivant l'une des revendications précédentes,
**caractérisé en ce**
**que**, lors de l'apparition d'une condition de déclenchement, l'activation d'un affichage, pouvant être prédéterminé, est déclenché sur un dispositif d'affichage (60).

9. Testeur de protocole (42) suivant l'une des revendications précédentes,
**caractérisé en ce**
**que** le dispositif (52), destiné à la mesure du taux d'erreurs sur les bits, présente une sortie, sur laquelle au moins une valeur d'un taux mesuré d'erreurs sur les bits peut être mise à disposition, moyennant quoi le testeur de protocole (42) comprend en outre un dispositif de mémoire, qui est conçu pour enregistrer les données décodées en même temps que la au moins une valeur associée du taux mesuré d'erreurs sur les bits.

10. Testeur de protocole (42) suivant l'une des revendications précédentes,
**caractérisé en ce**
**que** le testeur de protocole (42) comprend en outre un dispositif de commande (62) pour un dispositif d'affichage (60), moyennant quoi le dispositif de commande (62) est couplé au dispositif de décodage de protocoles (50) et au dispositif (52) destiné à la mesure du taux d'erreurs sur les bits et est conçu pour mettre à disposition, à sa sortie, un signal pour le dispositif d'affichage (60) qui comprend l'affichage simultané sur le dispositif d'affichage (60) d'au moins un signal de sortie du dispositif de décodage de protocoles (50) et d'au moins un signal de sortie du dispositif (52), destiné à la mesure du taux d'erreur sur les bits.

11. Procédé destiné à l'exécution d'un test de protocole, moyennant quoi le testeur de protocole (42) comprend une entrée (46) pour l'injection de données, un dispositif de décodage de protocoles (50) destiné au décodage de données, une sortie destinée à la mise à disposition des données décodées et un dispositif (52) destiné à la mesure du taux d'erreurs sur les bits,
avec les étapes suivantes consistant à :
a) décoder les données au moyen du dispositif de décodage de protocoles (50) et
b) mesurer le taux d'erreurs sur les bits au moyen du dispositif (52), destiné à la mesure du taux d'erreurs sur les bits,
**caractérisé en ce**
**que**, après l'apparition d'une condition de déclenchement, liée à l'apparition d'au moins un évènement dans les données décodées, une action concernant l'étape b) est déclenchée
et / ou, après l'apparition d'une condition de déclenchement, liée à l'apparition d'une valeur, pouvant être prédéterminée, du taux d'erreurs sur les bits, qui est mise à disposition par le dispositif (52), destiné à la mesure du taux d'erreurs sur les bits, une action concernant l'étape a) est déclenchée.
